# FASCICULE DE BREVET EUROPEEN

(11) **EP 0 344 048 B1**
(45) Date de publication et mention de la délivrance du brevet: **07.04.1993**
(21) Numéro de dépôt: 89401385.3
(22) Date de dépôt: 19.05.1989
(51) Int. Cl.: F16K 17/168, B64D 13/04, F16K 17/196

(54) **Vanne à ouverture autonome et aéronef comportant une telle vanne**
Selbständig öffnendes Ventil und Luftfahrzeug, mit einem derartigen Ventil
Autonomously opening valve and aircraft equipped with such a valve

(30) Priorité: 27.05.1988 FR 8807082
(43) Date de publication de la demande: 29.11.1989
(73) Titulaire: ABG SEMCA S.A., 31016 Toulouse Cédex (FR)
(72) Inventeur: Signoret, Jacques, F-92045 Paris La Défense (FR); Fraisse, Jacques, F-92045 Paris La Défense (FR); Baroux, Bruno, F-92045 Paris La Défense (FR); Carla, Francis, F-92045 Paris La Défense (FR)
(74) Mandataire: Ruellan-Lemonnier, Brigitte

(56) Documents cités:
- EP-A- 343 020
- FR-A- 1 568 448
- FR-A- 1 568 449
- FR-A- 2 238 880
- FR-A- 2 244 953
- US-A- 2 407 540
- US-A- 3 544 045
- US-A- 3 740 006

## Description

L'invention se rapporte principalement à une vanne à ouverture autonome et à un aéronef comportant une telle vanne.

On connaît des vannes, qui permettent, sur commande, de laisser passer un débit désiré d'un fluide entre par exemple deux enceintes au sein desquelles règnent des pressions différentes. Les vannes de type connu permettent de réaliser des régulations de débits ou de pressions. Elles peuvent s'ouvrir automatiquement lorsque la différence des pressions ou des débits régulés dépasse un certain seuil, comme cela est indiqué dans le brevet français N° 1 568 448 générique. Pour permettre une régulation stable les vannes sont prévues pour fonctionner dans un domaine de débit déterminé. Ainsi, il n'est pas possible, par exemple en cas d'incident, d'obtenir, par une ouverture rapide et complète de la vanne l'équilibrage des pressions.

Ainsi, dans le cas d'utilisations les plus courantes on ne dispose pas de moyens de sécurité pour effectuer un équilibrage de pressions. Dans les technologies de pointe comme par exemple en aéronautique, on utilise des clapets prévus pour s'ouvrir si la différence de pression sur leurs deux faces excède un seuil prédéterminé.

Mais, il s'avère que le fait de disposer sur une paroi séparant, par exemple deux enceintes ou, une enceinte de l'extérieur, d'un clapet et d'une vanne pose des problèmes importants. D'une part, il faut disposer de la place nécessaire à la vanne et au clapet. Cela n'est pas toujours le cas notamment si les vannes et clapets doivent être disposés par exemple sur une tuyauterie reliant des tubes de réacteurs chimiques, ou des points d'une colonne de distillation, par exemple de pétrole.

D'autre part, le fait de réaliser une ouverture nécessaire au passage de la vanne et du clapet fragilise la paroi. Cette fragilisation pourra être partiellement compensée par une structure par exemple métallique mise en place autour de la vanne et du clapet. Mais cette structure métallique est chère et lourde. Le poids supplémentaire est particulièrement grave dans le cas de réalisations d'aéronefs.

La Demande de Brevet FR-A-88 05068 (EP-A 343 020 publié le 23/11/89) non publiée le jour du dépôt de la présente demande décrit une vanne susceptible de s'ouvrir de façon autonome sous l'action d'une différence de pression dépassant un seuil prédéterminé.

La figure 8 de la demande précitée décrit une vanne à deux volets à récupération de poussée comportant une bielle télescopique permettant le découplage mécanique de deux volets et donc l'ouverture autonome d'un des volets sous l'action d'une différence de pression dépassant un seuil.

La présente invention a pour objet une amélioration d'une vanne à deux volets à récupération de poussée à ouverture autonome si la différence de pression dépasse un seuil.

Dans l'exemple préféré de réalisation de la vanne selon la présente invention, la bielle assurant le couplage des deux volets est rigide. Par contre, au moins un des volets peut tourner autour de son axe, pour s'ouvrir de façon automatique si la différence des pressions, par exemple dans un sens prédéterminé dépasse un seuil.

La solidarisation en fonctionnement normal des deux volets est assurée par exemple par le poids du volet et/ou par un ressort.

Le remplacement de la bielle télescopique, par une bielle rigide, permet d'améliorer la sécurité de fonctionnement et de minimiser l'usure.

L'invention consiste en une vanne comportant des moyens permettant son ouverture autonome automatique dans le cas où la différence de pression sur les deux faces dépasse un seuil. Ces moyens empêchent l'ouverture de la vanne tant que le seuil de la différence de pression n'est pas atteint. L'ouverture s'effectue automatiquement quand les forces résultant de la différence de pression ne sont plus équilibrées par les forces maintenant soit fermée soit partiellement ouverte la vanne. L'ouverture de la vanne tant que la différence de pression n'a pas atteint le seuil désiré est empêchée par exemple par le poids de la vanne, par des ressorts, par des aimants et/ou par des électro-aimants. L'ouverture complète de la vanne se fait soit par translation soit par rotation avantageusement d'un seul volet de la vanne.

Dans une variante de réalisation, l'ouverture de la vanne n'est pas complète, mais, dans tous les cas elle est suffisante pour réaliser un équilibrage rapide des pressions.

Le dispositif selon la présente invention permet de n'effectuer qu'un trou unique dans la paroi qui le supporte. Ainsi on minimise la fragilisation de la paroi, on diminue le poids par la suppression d'une structure entourant l'ouverture tout en diminuant le coût de fabrication. De plus, dans les cas où la surface disponible est limitée le dispositif selon la présente invention permet de réaliser une ouverture unique plus grande, à la place de deux ouvertures destinées l'une à la vanne, et l'autre au clapet. Ainsi, avec le dispositif selon la présente invention il est possible de réaliser des vannes ayant des surfaces d'échange plus grandes et par là même d'améliorer le fonctionnement et la sécurité du dispositif.

L'invention concerne une vanne telle que décrite dans les revendications 1 à 7 et 11.

L'invention concerne aussi un aéronef tel que décrit dans les revendications 8 à 10.

L'invention sera mieux comprise au moyen de la description ci-après et des figures annexées données comme des exemples non limitatifs parmi lesquelles :
- la figure 1 est un schéma d'un premier exemple de réalisation du dispositif selon la présente invention ;
- la figure 2 est un schéma du dispositif de la figure 1 dans la position ouverte de façon autonome ;
- la figure 3 est un schéma du dispositif de la figure 1 verrouillé en position fermée ;
- la figure 4 est un schéma d'un aéronef selon la présente invention.

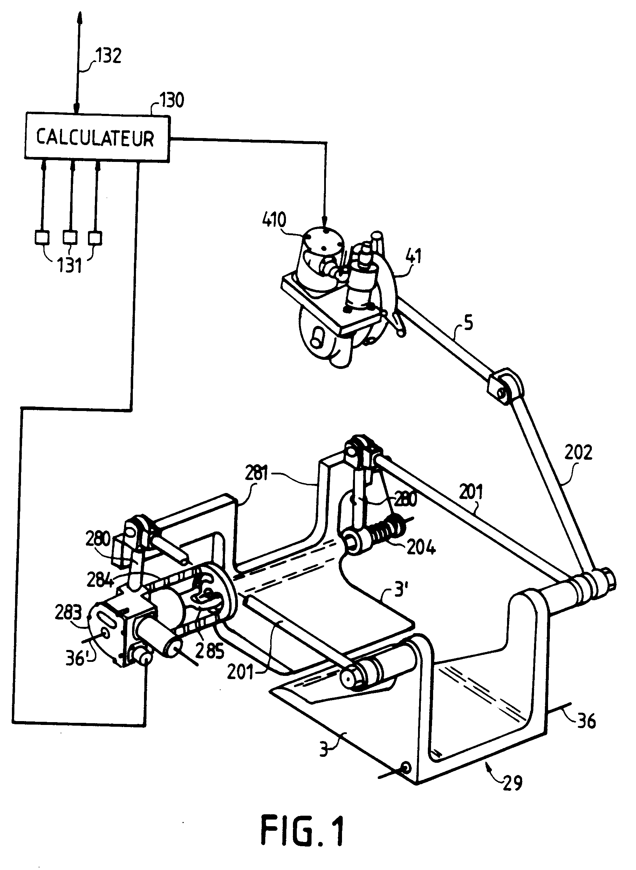

Sur les figures 1 à 4 on a utilisé les mêmes références pour désigner les mêmes éléments.

Sur la figure 1, on peut voir une vanne 29 partiellement ouverte, en fonctionnement normal sur commande d'un calculateur 130 relié par exemple à des moyens de mesure de pression 131 et/ou par une liaison 132 à d'autres calculateurs.

La vanne de la figure 1 comporte un volet 3 dont l'ouverture, sur commande, est obtenue par un jeu de bielles 5,202 reliant le volet à un actionneur 41. L'actionneur 41 est susceptible d'être entraîné par un moteur 410. Dans l'exemple de la figure 1, l'ouverture s'effectue vers le bas par la rotation autour de l'axe 36.

La vanne 29 comprend un second volet 3′. Le volet 3′ est entraîné par une bielle 201 reliée aux bielles 5,201 assurant l'ouverture du volet 3. Le volet 3′ s'ouvre vers le haut de la figure 1.

L'originalité de la vanne 29 selon la présente invention par rapport à une vanne à récupération de pression de type connu réside dans le fait qu'au moins un volet, par exemple 3′ peut tourner autour de son axe 36′ sous l'action de la pression s'exerçant par exemple sur le volet 3′.

Toutefois, en fonctionnement normal, il est primordial pour assurer l'ouverture désirée de maintenir le couplage mécanique entre les volets 3 et 3′.

Dans l'exemple préféré de réalisation de la vanne 29 selon l'invention, le couplage est assuré par le poids du volet 3′ et par un ressort de rappel 204. Le ressort 204 plaque le volet 3′ contre la bielle d'entraînement 280. Dans l'exemple de réalisation préféré, illustré sur les figures, le volet 3′ comporte une butée 281 perpendiculaire à la base du volet 3′. La bielle 280 appuie sur la butée 281, le ressort 204 bloquant cette butée contre la bielle 280. Pour obtenir l'ouverture, le moteur 410 doit vaincre la force de rappel exercée par le ressort 204.

Il est bien entendu possible, sans sortir du cadre de la présente invention de le laisser librement tourner autour de l'axe 36, vers le bas de la figure et de munir le volet 3 d'un ressort de rappel.

Ainsi, la vanne peut s'ouvrir dans les deux sens, de façon automatique et autonome sous l'action d'une différence de pression dès qu'elle dépasse un seuil.

Les vannes comportant au moins un volet libre de tourner autour de son axe et comportant deux ressorts agissant en sens contraires ne sortent pas du cadre de la présente invention. Dans cet exemple de réalisation aussi l'ouverture de la vanne en fonctionnement normal est imposée par la position de la bielle 280.

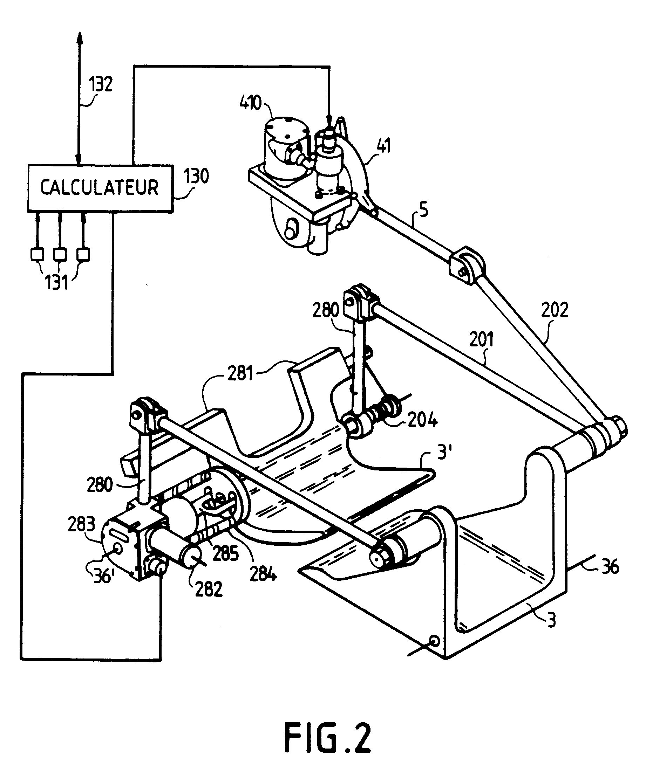

Sur la figure 2, on peut voir le fonctionnement de la vanne 29 en présence d'une différence de pression entre la face supérieure et la face inférieure des volets 3 et 3′. Si cette différence de pression dépasse un seuil prédéterminé, le ressort 204 n'est plus capable de plaquer la butée 281 contre la bielle 280. On obtient alors une ouverture du volet 3′ permettant un équilibrage de pression. Quand la différence de pression entre les deux faces des volets de la vanne 29 a diminué en-dessous du seuil, par exemple par suite de l'équilibrage de pression, le ressort plaque la butée 204 contre la bielle 281. Ainsi, selon la position de la bielle 280 (fonction de l'ouverture, commandée de la vanne 29 par exemple par le calculateur 130) le ressort 204 referme, partiellement ou totalement, la vanne 29.

Pour obtenir un seuil d'ouverture de la vanne 29 on peut jouer, par exemple, sur la force de rappel du ressort 204 en fonction du poids et de la surface du volet.

Il est bien entendu que l'utilisation d'autres moyens pour obtenir la force de rappel, comme par exemple des aimants ou des électro-aimants ne sort pas du cadre de la présente invention.

Avantageusement, la vanne 29 comporte des moyens de verrouillage en position fermée pour permettre une isolation hermétique.

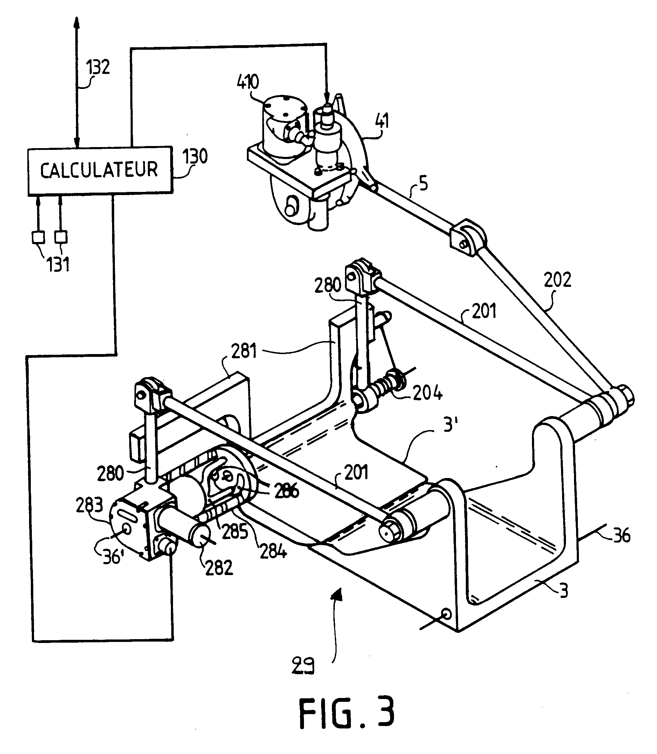

L'utilisation des moyens de verrouillage est illustrée sur la figure 3. Les moyens de verrouillage comportent par exemple une pièce 284 solidaire du volet 3′, une pièce de blocage 285 et un actionneur 283.

Dans l'exemple de réalisation illustré sur les figures, la pièce 284 comporte deux évidements 286. Dans les évidements est placée la pièce de blocage 285 par exemple en forme de fourche.

En fonctionnement normal, la fourche est placée dans une position ne gênant pas la rotation du volet 3′ autour de l'axe 36′.

Sur commande, l'actionneur 283 fait tourner la pièce 285 pour fermer la vanne. Avantageusement, l'actionneur 283 est un actionneur irréversible qui maintient fermée la vanne 29 même en absence d'un quelconque signal de commande.

Dans l'exemple de réalisation illustré sur les figures, l'actionneur est mis en marche par un moteur 282 sur commande provenant du calculateur 130. La consigne de fermeture est transmise au calculateur 130 par exemple par la ligne 132.

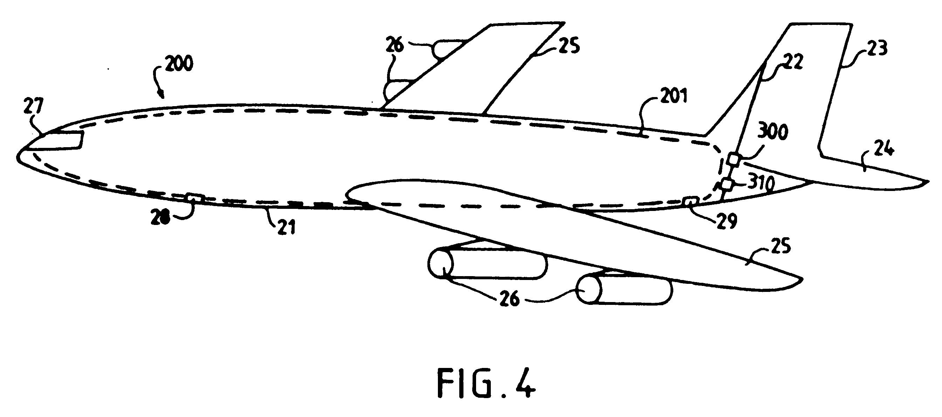

Sur la figure 4, on peut voir un aéronef 200 selon la présente invention. L'aéronef 200 comprend une enceinte pressurisée 201, deux ailes 25, par exemple quatre moteurs 26, un gouvernail vertical 23, deux empennages 24 et un cockpit 27.

L'enceinte pressurisée 201 est délimitée par la structure extérieure 21 de l'avion appelée peau et par une paroi arrière 22. La paroi arrière 22 est relativement fragile pour réduire la masse de l'avion. Cette enceinte pressurisée doit comporter deux soupapes 300,310 de sécurité chargées de limiter en surpression et en dépression la différence de pression entre l'enceinte pressurisée et l'extérieur et ainsi d'éviter toute déformation de la structure de l'avion.

Cette différence de pression peut provenir en surpression d'une panne de régulation et en dépression d'un changement rapide d'altitude (descente urgente) par exemple.

Il est parfois nécessaire d'ajouter un élément supplémentaire aux deux soupapes de sécurité si celles-ci ne suffisent pas à assurer les sécurités (pour des raisons d'encombrement, de place pour loger les soupapes). Dans les aéronefs de type connu, on ajoute alors un clapet de dépression qui permet de couvrir les cas de pannes d'une soupape et d'assurer avec les deux soupapes les conditions de sécurité normale.

L'avion 200 comporte en outre une vanne de régulation 28 et une vanne de ventilation 29. La vanne de régulation est prévue pour exécuter ce que l'on appelle "les séquences de vol" c'est-à-dire pour réguler la pression interne de façon à assurer le confort des passagers. La vanne de ventilation 29 permet un équilibrage complet des pressions lors de l'arrêt de l'avion. Il faut remarquer que les avions modernes comme par exemple l'avion de la série AIRBUS A300, A310, A320, A330 et A 340 comportent des volumes importants et ont des possibilités de manoeuvre avec changement d'altitude rapide. Ainsi, il est impératif de pouvoir effectuer les équilibrages de pression rapides pour empêcher d'endommager la structure de l'avion par une trop forte différence de pression. Or, le fait de placer un clapet de sécurité et de faire un trou sur la peau de l'avion présente des inconvénients graves. D'autre part, du fait des performances et du volume de l'avion, les soupapes de sécurité 300 et 310 risquent de s'avérer insuffisantes en cas d'incident. Ainsi, il est avantageux d'utiliser les vannes des figures 1,2 et 3 pour réaliser la vanne de régulation et/ou la vanne de ventilation pour assurer, si cela s'avère nécessaire, l'équilibrage de pression interne et externe.

Dans un exemple de réalisation, l'avion ne comporte pas de soupapes de sécurité 300 et 310, la ou les vannes 28 et/ou 29 assurant l'équilibrage de pression de sécurité.

Avantageusement, c'est la vanne de ventilation qui, normalement durant le vol, n'est pas active, et qui, dans le cas d'une descente rapide de l'avion, permettrait, de façon autonome, à l'air extérieur de rentrer à l'intérieur, pour réaliser un tel équilibre.

Avantageusement, on dispose les vannes 28 et 29 sur le ventre de l'avion, en-dessous de la ligne de flottaison. Ainsi on facilite la maintenance qui peut se faire par le bas et d'autre part on facilite l'écoulement d'air de climatisation dont l'admission se situe dans la partie haute de l'avion. Ainsi il est impératif, pour assurer la sécurité de l'avion en cas d'amerrissage, de permettre le verrouillage en position fermée de la vanne 29. Le blocage est obtenu par le fonctionnement du commutateur marqué "ditching" sur le tableau de commande de l'avion.

Le dispositif selon la présente invention s'applique à tout dispositif de régulation de pression et/ou de débit entre une enceinte et l'extérieur ou entre deux enceintes comportant un dispositif d'équilibrage de sécurité.

L'invention s'applique notamment à la construction aéronautique, à la construction de raffineries de pétrole, de dispositifs de distribution de fluide et de réacteurs chimiques.

## Revendications

1. Vanne (29) à deux volets (3, 3′) à récupération de poussée comportant des moyens de positionnement (41, 410, 5, 201, 202, 280) permettant son ouverture sur commande, caractérisée par le fait qu'elle comporte des moyens de rappel (204) solidarisant un des volets (3′) avec les moyens de positionnement lorsque la différence de pression sur les deux faces du volet n'excède pas un seuil prédéterminé et désolidarisant le volet (3′) desdits moyens de positionnement de façon que ledit volet puisse tourner autour de son axe de rotation (36′) pour ouvrir la vanne lorsque la différence de pression sur les deux faces dépasse ledit seuil prédéterminé.

2. Vanne (29) selon la revendication 1, caractérisée par le fait que les moyens de rappel (204) comprennent un ressort.

3. Vanne selon la revendication 1 ou 2, caractérisée par le fait que le volet (3′) susceptible de s'ouvrir comporte une butée (281) sur laquelle vient prendre appui une bielle (280) des moyens de positionnement.

4. Vanne selon la revendication 1, 2 ou 3, caractérisée par le fait que les moyens de positionnement comportent un vérin (41, 410).

5. Vanne (29) selon la revendication 1, 2, 3 ou 4, caractérisée par le fait qu'elle comporte des moyens (283, 284, 285) de fermeture et de verrouillage de la vanne (29) en position fermée indépendamment des conditions de pression régnant sur les deux faces des volets (3, 3′).

6. Vanne (29) selon la revendication 5, caractérisée par le fait que les moyens (283, 284, 285) de fermeture et de verrouillage comportent une pièce (284) solidaire du volet (3′) susceptible de se désolidariser des moyens de positionnement (41, 410, 5, 202, 201, 280) cette pièce (284) comportant des ouvertures (286) dans lesquelles prend place une pièce de blocage (285).

7. Vanne selon la revendication 6, caractérisée par le fait que les moyens (283, 284, 285) de fermeture et de verrouillage comportent un vérin (283, 285) susceptible, sur commande, de faire tourner la pièce de blocage (285) dans les ouvertures (286).

8. Aéronef (200), caractérisé par le fait qu'il comporte au moins une vanne (29) selon l'une quelconque des revendications précédentes.

9. Aéronef (200) selon la revendication 8, caractérisé par le fait que la vanne (29) est une vanne de ventilation (29) destinée à équilibrer les pressions extérieures et intérieures lorsque l'aéronef (200) est posé au sol.

10. Aéronef (200) selon la revendication 8 ou 9, caractérisé par le fait que sous l'influence d'une pression extérieure trop importante, la vanne (29) s'ouvre vers l'intérieur de l'aéronef.

11. Vanne selon la revendication 1, caractérisée en ce que les deux volets (3, 3′) sont reliés par une bielle (201) comportant des moyens (204) permettant la variation de la longueur de ladite bielle sous l'action d'une différence des pressions appliquées sur les deux faces de la vanne.

## Patentansprüche

1. Schieber (29) mit zwei Klappen (3, 3′) zur Druckrückgewinnung mit Positionierungsmitteln (41, 410, 5, 201, 202, 280), die seine Öffnung auf Befehl erlauben, dadurch gekennzeichnet, daß er Rückstellmittel (204) aufweist, die eine der Klappen (3′) fest mit den Positionierungsmitteln verbinden, wenn die Druckdifferenz an beiden Seiten der Klappe nicht über einen vorbestimmten Schwellwert hinausgeht, und die Klappe (3′) von den Positionierungsmitteln dann, wenn die Druckdifferenz an beiden Seiten den vorbestimmten Schwellwert überschreitet, so trennt, daß sich die Klappe um ihre Drehachse (36′) drehen kann, um den Schieber zu öffnen.

2. Schieber (29) nach Anspruch 1, dadurch gekennzeichnet, daß die Rückstellmittel (204) eine Feder aufweisen.

3. Schieber nach Anspruch 1 oder 2, dadurch gekennzeichnet, daß die zu öffnende Klappe (3′) einen Anschlag (281) aufweist, an dem eine Schubstange (280) der Positionierungsmittel in Anlage kommt.

4. Schieber nach Anspruch 1, 2 oder 3, dadurch gekennzeichnet, daß die Positionierungsmittel ein Stellglied (41, 410) aufweisen.

5. Schieber (29) nach Anspruch 1, 2, 3 oder 4, dadurch gekennzeichnet, daß er Mittel (283, 284, 285) zum Schließen und Verriegeln des Schiebers (29) in einer geschlossen Position unabhängig von den an den beiden Seiten der Klappen (3, 3′) herrschenden Druckverhältnissen aufweist.

6. Schieber (29) nach Anspruch 5, dadurch kennzeichnet, daß die Mittel (283, 284, 285) zum Schließen und Verriegeln ein mit der Klappe (3′) fest verbundenes Stück (284) aufweisen, das sich von den Positioniermitteln (41, 410, 5, 202, 201, 280) lösen kann, wobei dieses Stück (284) Öffnungen (286) aufweist, in denen ein Blockierstück (285) unterkommt.

7. Schieber nach Anspruch 6, dadurch gekennzeichnet, daß die Mittel (283, 284, 285) zum Schließen und Verriegeln ein Stellglied (283, 285) aufweisen, das auf Befehl das Blockierstück (285) in den Öffnungen (286) drehen lassen kann.

8. Luftfahrzeug (200), dadurch gekennzeichnet, daß es wenigstens einen Schieber (29) nach einem der vorhergehenden Ansprüche aufweist.

9. Luftfahrzeug (200) nach Anspruch 8, dadurch gekennzeichnet, daß der Schieber (29) ein Belüftungsschieber (29) ist, der dazu bestimmt ist, den Außen- und Innendruck auszugleichen, wenn sich das Luftfahrzeug (200) am Boden befindet.

10. Luftfahrzeug (200) nach Anspruch 8 oder 9, dadurch gekennzeichnet, daß sich der Schieber (29) unter dem Einfluß eines zu hohen Außendrucks zum Inneren des Luftfahrzeugs hin öffnet.

11. Schieber nach Anspruch 1, dadurch gekennzeichnet, daß die beiden Klappen (3, 3′) durch eine Schubstange (201) verbunden sind, die Mittel (204) aufweist, um die Länge der Schubstange unter der Wirkung einer Differenz der auf die beiden Seiten des Schiebers aufgebrachten Drücke zu variieren.

## Claims

1. A valve (29) having two flaps (3, 3′) with recovery of thrust comprising positioning means (41, 410, 5, 201, 202, 280) allowing its opening on command, characterised in that it comprises restoring means (204) rendering one of the flaps (3′) integral with the positioning means when the difference in pressure on the two faces of the flap does not exceed a predetermined threshold and disassociating the flap (3′) from the said positioning means so that the said flap can rotate about its axis of rotation (36′) in order to open the valve when the difference in pressure on the two faces exceeds the said predetermined threshold.

2. A valve (29) according to claim 1, characterised in that the restoring means (204) comprise a spring.

3. A valve according to claim 1 or 2, characterised in that the flap (3′) which is capable of opening comprises a stop (281) on which a connecting rod (280) of the positioning means comes to bear.

4. A valve according to claim 1, 2 or 3, characterised in that the positioning means comprise a jack (41, 410).

5. A valve (29) according to claim 1, 2, 3 or 4, characterised in that it comprises means (283, 284, 285) for closing and locking the valve (29) in the closed position independently of the pressure conditions prevailing on the two faces of the flaps (3, 3′).

6. A valve (29) according to claim 5, characterised in that the closure and locking means (283, 284, 285) comprise a part (284) integral with the flap (3′) capable of disassociating itself from the positioning means (41, 410, 5, 202, 201, 280), this part (284) comprising apertures (285) in which a blocking part (285) takes up position.

7. A valve according to claim 6, characterised in that the closure and locking means (283, 284, 285) comprise a jack (283, 285) capable, on command, of rotating the blocking part (285) in the apertures (286).

8. An aircraft (200), characterised in that it comprises at least one valve (29) according to any one of the preceding claims.

9. An aircraft according to claim 8, characterised in that the valve (29) is a ventilation valve (29) intended to equilibrate the external and internal pressures when the aircraft (20) is set down on the ground.

10. An aircraft (200) according to claim 8 or 9, characterised in that under the influence of an external pressure which is too great the valve (29) opens towards the interior of the aircraft.

11. A valve according to claim 1, characterised in that the two flaps (3, 3′) are connected by a connecting rod (201) comprising means (204) allowing the length of the said connecting rod to be varied under the action of a difference in the pressures applied to the two faces of the valve.
